# FASCICULE DE BREVET EUROPEEN

(11) **EP 4 316 884 B1**
(45) Date de publication et mention de la délivrance du brevet: **16.10.2024**
(21) Numéro de dépôt: 23187417.3
(22) Date de dépôt: 25.07.2023
(51) Int. Cl.: B60K 1/02

(54) **SYSTÈME DE PROPULSION POUR VÉHICULE ÉLECTRIQUE OU HYBRIDE**
ANTRIEBSSYSTEM FÜR EIN ELEKTRO- ODER HYBRID-FAHRZEUG
PROPULSION SYSTEM FOR AN ELECTRIC OR HYBRID VEHICLE

(30) Priorité: 04.08.2022 FR 2208114
(43) Date de publication de la demande: 07.02.2024
(73) Titulaire: VALEO EMBRAYAGES, 80009 Amiens (FR)
(72) Inventeur: RUMEAU, Eric, 80009 Amiens (FR)
(74) Mandataire: Valeo Powertrain Systems

(56) Documents cités:
- WO-A1-2020/025775
- WO-A1-2020/037233
- US-A1- 2021 054 908
- US-A1- 2021 291 634

## Description

### DOMAINE TECHNIQUE DE L'INVENTION

L'invention se rapporte à un système de propulsion pour véhicule électrique ou hybride. Ce système de propulsion comprend notamment plusieurs machines électriques fournissant un couple moteur et au moins une succession de trains d'engrenage destinés à être raccordé aux roues du véhicule. De manière optionnelle, le système de propulsion peut comprendre des systèmes de couplage sélectif distincts capables de fournir plusieurs rapports de réduction de vitesse et plusieurs modes de fonctionnement distincts à l'utilisateur du véhicule. Lorsque le véhicule comprend également un moteur thermique accouplé aux machines électriques, le véhicule est dit « hybride » du fait que la propulsion du véhicule puisse se faire soit de manière purement électrique, soit de manière purement thermique ou de manière hybride en utilisant les deux types d'énergie simultanément.

Dans le cas d'un véhicule à propulsion purement électrique, c'est à dire dépourvu de moteur thermique, la fourniture d'électricité peut être réalisée à l'aide de batterie ou au moyen d'une pile à combustible utilisant l'hydrogène comme combustible réducteur. Le véhicule électrique peut être un véhicule automobile ou un véhicule industriel, tel qu'un poids lourd, un autobus ou un tracteur.

### ÉTAT DE LA TECHNIQUE ANTÉRIEURE

On connaît par exemple un tel système de propulsion de la demande de brevet WO17080571 A1. Le système de propulsion selon cette demande de brevet comporte une première machine électrique réversible et une deuxième machine électrique réversible rapportées sur un carter de transmission, une transmission agencée pour transmettre un couple depuis les machines électriques à une paire de roues entraînées d'un véhicule. Dans ce système de propulsion, le rotor de la première machine électrique est relié en entraînement à un premier arbre d'entrée de la transmission et le rotor de la deuxième machine électrique est relié en entraînement à un second arbre d'entrée de la transmission, lesdits arbres de transmission étant parallèles. Un premier trajet de couple, permettant de transmettre un couple depuis la première machine électrique réversible vers la paire de roues, comprend un seul rapport de transmission entre le premier arbre d'entrée et un arbre de sortie de la transmission. Un deuxième trajet de couple, permettant de transmettre un couple depuis la deuxième machine électrique réversible vers la paire de roues, comprend deux rapports de transmission sélectionnables et peut venir séparément en prise entre le deuxième arbre d'entrée et ledit arbre de sortie de la transmission. Dans ce système de propulsion, les trois rapports de transmission des premier et deuxième trajets de couple sont différents les uns des autres.

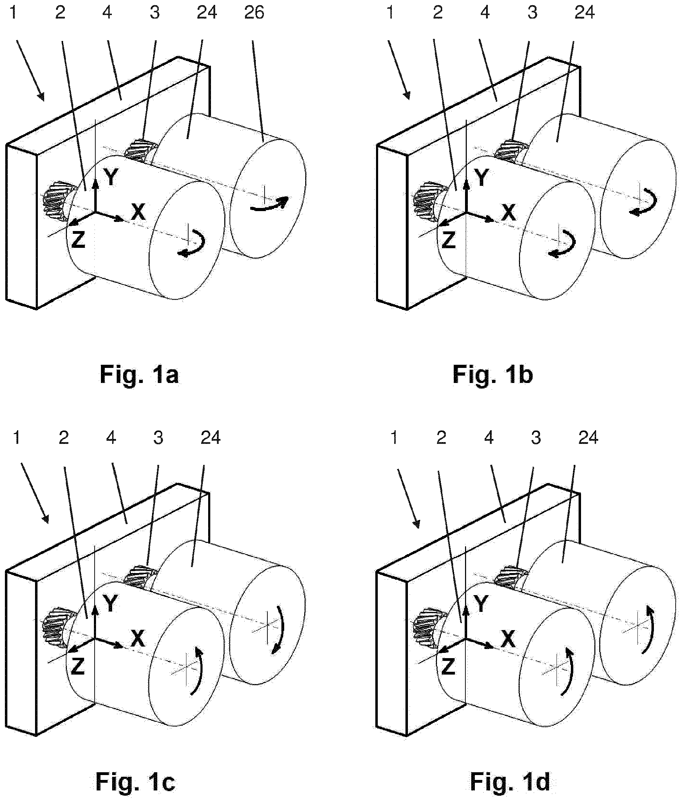

La structure de la machine électrique réversible se présente schématiquement (voir figure 1a) de la manière suivante : la machine comprend un stator, un rotor présentant un arbre de sortie mobile en rotation autour d'un axe de rotor X et une enveloppe de protection 24 entourant le stator. L'enveloppe de protection 24 est de forme sensiblement cylindrique pour laquelle le diamètre extérieur D est par exemple inférieur à la longueur L du carter. L'enveloppe de protection comprend une embase de fixation sur un carter de transmission 4 localisée du côté de l'arbre de sortie du rotor de la machine électrique. L'enveloppe de protection comprend une extrémité libre 26, située à l'opposé axialement de l'embase de fixation. Sur cette extrémité libre est placé de la connectique électrique et/ou de l'électronique de puissance. Dans le système de propulsion connu de l'Art Antérieur, les machines électriques sont fixées via leur embase de fixation à l'aide de vis de fixation sur un carter de transmission qui englobe et supporte le réducteur de vitesse pour les différents rapports de transmission sélectionnables. Les extrémités libres des enveloppes de protection sont mécaniquement découplées.

Un tel système de propulsion est contraignant du fait que les machines électriques réversibles peuvent osciller autour d'un plan privilégié en raison de la flexion du carter de transmission qui les supporte. Sur les figures 1a à 1d sont illustrées les mouvements possibles des extrémités des enveloppes de protection de deux machines électriques suivant les différents modes de flexion possible du carter de transmission.

La figure 1a illustre une flexion du carter de transmission 4 suivant le premier plan XY avec une oscillation des machines électriques autour de l'axe secondaire Y suivant des sens de rotation opposés. La figure 1b illustre une flexion du carter de transmission 4 toujours suivant le premier plan XY mais avec une oscillation des machines électriques autour de l'axe secondaire Y suivant le même sens de rotation. La figure 1c illustre une flexion du carter de transmission 4 suivant le troisième plan XZ avec une oscillation des machines électriques autour de l'axe Z suivant des sens de rotation opposés. La figure 1d illustre une flexion du carter de transmission 4 toujours suivant le troisième plan XZ mais avec une oscillation des machines électriques autour de l'axe Z suivant le même sens de rotation. Les mouvements des enveloppes de protection génèrent un rayonnement acoustique de forte intensité. Les amplitudes d'oscillation des enveloppes de protection sont également fonction des couples à transmettre au sein du système de propulsion, de la vitesse de rotation des rotors et du type de machine électrique réversible utilisée.

De plus, les oscillations des machines électriques font varier la position des extrémités des rotors en prise avec les engrenages des arbres de transmission de l'ordre de plusieurs microns. Une telle variation au niveau de l'engrènement de la denture du rotor par rapport à l'arbre de transmission générera des bruits de fonctionnement au sein du système de propulsion,

Un système de propulsion représentant un état de la technique pertinent est connu du document US 2021/054908 A1.

Il existe un besoin pour améliorer le confort acoustique des systèmes de propulsion pour véhicule électrique ou hybride comprenant plusieurs machines électriques et une succession de trains d'engrenage rapportés sur un carter de transmission.

### EXPOSÉ DE L'INVENTION

L'invention se propose notamment d'améliorer ce système de propulsion connu.

A cet effet, l'invention a pour objet un système de propulsion pour véhicule électrique ou hybride, comprenant dans un repère orthogonal XYZ :
- un ensemble de n machines électriques de propulsion, n étant un nombre entier supérieur ou égal à 2, chaque machine électrique comprenant un stator, un rotor présentant un arbre de sortie mobile en rotation autour d'un axe de rotor X et une enveloppe de protection entourant le stator ;
- un train d'engrenage lié cinématiquement aux n arbres de sortie et apte à recevoir le couple moteur fourni par les n machines électriques ;
- un carter de transmission supportant les enveloppes de protection des n machines électriques et au moins en partie le train d'engrenage.
Le système de propulsion selon l'invention étant remarquable en ce que les enveloppes de protection des n machines électriques sont reliées entre-elles par un élément de réduction de bruit disposé géométriquement entre les axes de rotation des rotors des n machines électriques.

Ce système de propulsion présente l'avantage, grâce à la présence d'un élément de réduction de bruit entre les axes de rotation des rotors, de réduire les oscillations des enveloppes de protection des machines électriques ainsi que la flexion du carter de transmission au moins dans le premier plan XY. En fonction de la géométrie de l'élément de réduction de bruit, il est possible de réduire la flexion du carter de transmission dans les deux plans XY et XZ en même temps.

Chaque machine électrique peut être configurée pour fonctionner de manière réversible, étant alors associée à une électronique tel qu'un onduleur /redresseur lui permettant alternativement : d'être alimentée en énergie électrique pour fournir un couple moteur, et de générer de l'énergie électrique sur la base d'un couple reçu sur son arbre de sortie lorsque le véhicule freine ou qu'il roule sur sa lancée, par exemple.

Chaque machine électrique est par exemple une machine électrique tournante. La machine électrique peut notamment être une machine synchrone à aimants permanents, une machine asynchrone, une machine électrique à réluctance variable ou une machine électrique synchrone à réluctance variable, dite synchro-réluctance. Alternativement, les n machines électriques peuvent être de conception différente.

En variante, les n machines électriques peuvent être de préférence une machine à haute tension, alimentée par exemple à une tension nominale comprise entre 300 Volts et 800 Volts. Des tensions d'alimentation plus élevées peuvent être envisagées telle que 900 volts. En variante, les n machines électriques peuvent être alimentée en 48 volts.

Les n machines électriques peuvent fournir une même puissance nominale mécanique, cette puissance étant par exemple comprise entre 50kW et 300kW. L'emploi de machines électriques identiques peut permettre de réduire les coûts de production du système de propulsion, en réduisant le besoin en développements spécifiques d'une machine à l'autre et en augmentant les volumes.

Avantageusement, les axes de rotation des rotors des n machines électriques peuvent être parallèles entre eux et les enveloppes de protection peuvent s'étendre axialement dans la même direction par rapport au carter de transmission. De cette manière, les dimensions de l'élément de réduction de bruit sont réduites au maximum pour limiter le poids.

De préférence, chaque enveloppe de protection peut être de forme sensiblement cylindrique définie par sa longueur L et son diamètre extérieur D, l'enveloppe de protection présentant un ratio de la longueur L divisée par le diamètre extérieur D supérieur à 0,8 tel que L / D > 0,8, de préférence L / D > 1, de préférence L / D > 2.

Avantageusement, le carter de transmission peut comporter une paroi externe, au moins une surface plane d'appui définissant un deuxième plan YZ perpendiculaire à l'axe de rotor X aménagée sur la paroi externe pour supporter les n machines électriques, et n ouvertures débouchant dans la ou les surfaces planes d'appui selon un axe parallèle à l'axe de rotor X, les n ouvertures étant traversées chacune par un arbre de sortie de rotor de machine électrique.

De préférence, chaque enveloppe de protection peut comprendre une embase de fixation pour la fixation sur le carter de transmission, l'élément de réduction de bruit étant disposé du côté d'une extrémité libre de l'enveloppe de protection située à l'opposé axialement de l'embase de fixation, au moins dans une zone située axialement entre le milieu de l'enveloppe de protection et son extrémité libre, l'élément de réduction de bruit pouvant s'étendre axialement selon l'axe de rotor X au-delà de l'extrémité libre. Une telle implantation de l'élément de réduction de bruit présente l'avantage de réduire le rayonnement acoustique généré par le mouvement de l'enveloppe de protection qui a naturellement tendance à faire office de « haut-parleur ».

Avantageusement, la surface plane d'appui des machines électriques sur le carter de transmission définit un deuxième plan YZ perpendiculaire à l'axe X de rotation du rotor, la raideur en flexion suivant le premier plan XY et/ou le troisième plan XZ de l'élément de réduction de bruit est supérieur à 10 % de la raideur en flexion du carter de transmission suivant le même plan. A partir d'un tel niveau de raideur, les extrémités libres des enveloppes de protection ne sont plus mécaniquement découplées. De préférence, la raideur en flexion suivant le premier plan XY et/ou le troisième plan XZ de l'élément de réduction de bruit est inférieur à 10 fois la raideur en flexion du carter de transmission suivant le même plan.

De préférence, chaque machine électrique peut être alimentée électriquement par au moins un onduleur de transformation de courant électrique continu en courant électrique alternatif, l'onduleur comprenant :
- un ensemble de composants électriques pour ladite transformation; et
- un boîtier de protection accueillant l'ensemble de composants électriques ;
l'onduleur étant fixé sur l'élément de réduction de bruit.

Avantageusement, l'au moins un onduleur peut être disposé axialement selon l'axe X dans la continuité des n machines électriques.

Selon un mode de réalisation de l'invention, l'élément de réduction de bruit peut être réalisé en matériau métallique tel que de l'acier ou de l'aluminium et présenter des caractéristiques mécaniques de raideur dans le deuxième plan YZ et / ou dans le troisième plan XZ. De cette manière, l'élément de réduction de bruit se caractérise par une raideur élevée qui vise à limiter le déplacement des extrémités libres des machines électriques par rapport au carter de transmission. On augmente ainsi la fréquence de résonance de flexion des machines électriques sur ledit carter. Une amplitude plus faible du mouvement de l'enveloppe de protection réduit le rayonnement acoustique.

Selon un autre mode de réalisation de l'invention, l'élément de réduction de bruit peut être réalisé au moins partiellement en élastomère et présenter des caractéristiques mécaniques de raideur et d'amortissement dans le deuxième plan YZ et / ou dans le troisième plan XZ. De cette manière, l'élément de réduction de bruit se caractérise par une raideur faible et un amortissement élevé qui vise à dissiper de l'énergie au sein du matériau élastomère. L'amplitude du mouvement de l'enveloppe de protection est de ce fait limitée. On réduit ainsi le rayonnement acoustique généré par l'enveloppe de protection.

L'élément de réduction de bruit peut comprendre une âme centrale réalisée en matériau élastomère et des interfaces de liaison solidarisées sur l'enveloppe de protection et réalisées en matériau métallique. L'âme centrale peut être surmoulée ou rapportée sur les interfaces de liaison.

Le matériau élastomère peut être en caoutchouc, ou en néoprène ou en une autre matière synthétique ayant des propriétés élastiques de compression.

L'invention peut présenter l'une ou l'autre des caractéristiques décrites ci-dessous combinées entre elles ou prises indépendamment les unes des autres :
- l'élément de réduction de bruit peut être une plaque de liaison reliant les extrémités libres des enveloppes de protection d'au moins n machines électriques, n étant un nombre entier supérieur ou égal à 2 ;
- la plaque de liaison peut être une plaque de fermeture de la machine électrique au niveau de son extrémité libre ;
- la plaque de liaison peut supporter les paliers de support en rotation des rotors des n machines électriques ;
- l'enveloppe de protection peut comprendre une plaque de fermeture amovible, la plaque de liaison pouvant être une plaque additionnelle à la plaque de fermeture de la machine électrique au niveau de son extrémité libre ;
- l'élément de réduction de bruit peut comprendre des goussets de rigidification ;
- l'élément de réduction de bruit peut être commun à toutes les machines électriques ;
- l'élément de réduction de bruit peut être rapporté sur le cylindre de l'enveloppe de protection de chaque machine électrique ;
- le train d'engrenage peut être un réducteur de vitesse comprenant des arbres de transmission distincts, chacun des arbres de transmission étant lié cinématiquement avec l'arbre de sortie d'au moins un rotor de sorte à former un réducteur de vitesse entre chaque arbre de sortie de rotor et chaque arbre transmission ;
- le train d'engrenage peut être une roue dentée commune liée cinématiquement avec l'arbre de sortie de chaque rotor, les n machines électriques étant réparties angulairement autour de la roue dentée commune de sorte à former un réducteur de vitesse entre chaque arbre de sortie de rotor et la roue dentée commune ;
- les n machines électriques peuvent être réparties de manière régulière autour de l'axe de rotation de la roue dentée commune selon un angle Δ égal à 360° / n ;
- le carter de transmission peut supporter les n machines électriques et la roue dentée commune à l'aide d'au moins un palier de guidage ;
- l'enveloppe de protection peut supporter en rotation l'arbre de sortie du rotor.
Toutes ces caractéristiques ont pour effet de participer à la réduction des oscillations des machines électriques et à la limitation de la flexion du carter de transmission au moins dans le premier plan XY.

Dans un cas de figure de l'invention où le système de propulsion comprendrait deux machines électriques, l'élément de réduction de bruit peut présenter dans le deuxième plan YZ une forme de croix et chacun des croisillons de la croix s'étendant selon l'axe de rotor X relie la première machine électrique à la deuxième machine électrique.

Dans un autre cas de figure de l'invention où le système de propulsion comprendrait deux machines électriques, l'élément de réduction de bruit peut présenter une forme plaque dans le troisième plan XZ et la plaque relie la première machine électrique à la deuxième machine électrique dans la zone située axialement entre le milieu de l'enveloppe de protection et l'extrémité libre de l'enveloppe de protection.

### BRÈVE DESCRIPTION DES FIGURES

D'autres caractéristiques et avantages de l'invention ressortiront à la lecture de la description qui suit, en référence aux figures annexées.
[Fig. 1a] La figure 1a est vue isométrique d'un système de propulsion pour véhicule électrique ou hybride connu de l'art antérieur dans lequel le carter de transmission est soumis à un premier mode de flexion,
[Fig. 1b] La figure 1b est vue isométrique du même système de propulsion dans lequel le carter de transmission est soumis à un deuxième mode de flexion,
[Fig. 1c] La figure 1c est vue isométrique du même système de propulsion dans lequel le carter de transmission est soumis à un troisième mode de flexion,
[Fig. 1d] La figure 1d est vue isométrique du même système de propulsion dans lequel le carter de transmission est soumis à un quatrième mode de flexion,
[Fig. 2] La figure 2 est une vue isométrique d'un système de propulsion pour véhicule électrique ou hybride selon un premier exemple de mise en oeuvre de l'invention,
[Fig. 3] La figure 3 est une vue isométrique d'un système de propulsion pour véhicule électrique ou hybride selon un deuxième exemple de mise en oeuvre de l'invention,
[Fig. 4] La figure 4 est une vue de face d'un système de propulsion pour véhicule électrique ou hybride selon un troisième exemple de mise en oeuvre de l'invention,
[Fig. 5] La figure 5 une vue de détail d'un élément de réduction de bruit selon le troisième exemple de mise en oeuvre de l'invention de la figure 4,
[Fig. 6] La figure 6 est une vue isométrique d'un système de propulsion pour véhicule électrique ou hybride selon un quatrième exemple de mise en oeuvre de l'invention,
[Fig. 7] La figure 7 est une vue isométrique d'un système de propulsion pour véhicule électrique ou hybride selon un cinquième exemple de mise en oeuvre de l'invention,
[Fig. 8] La figure 8 une vue de face du système de propulsion selon le cinquième exemple de mise en oeuvre de l'invention de la figure 7.
Pour plus de clarté, les éléments identiques ou similaires sont repérés par des signes de référence identiques sur l'ensemble des figures.

### DESCRIPTION DÉTAILLÉE DE MODES DE RÉALISATION

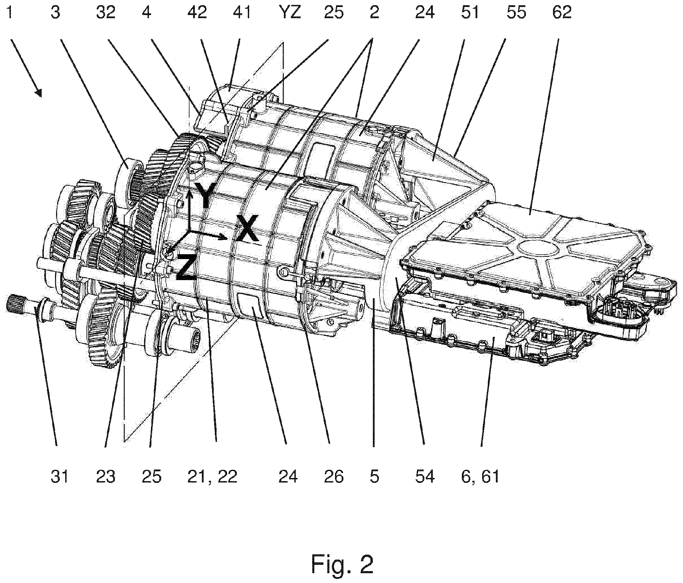

On a représenté sur la figure 2 un système de propulsion 1 de véhicule hybride selon un premier exemple de mise en oeuvre de l'invention comprenant dans un repère orthogonal XYZ :
- un ensemble de deux machines électriques 2 de propulsion, chaque machine électrique comprenant un rotor 22 présentant un arbre de sortie 23 mobile en rotation autour d'un axe de rotor X ;
- un train d'engrenage 3 lié cinématiquement aux deux arbres de sortie 23 et apte à recevoir le couple moteur fourni par les deux machines électriques ;
- un carter de transmission 4 supportant les deux machines électriques et en partie le train d'engrenage 3.

Les machines électriques tournantes 2 sont du même type et sont par exemple des machines synchrones à aimants permanents. Chaque machine électrique fournit une même puissance nominale mécanique, cette puissance étant par exemple de l'ordre 80kW. Selon une variante de l'invention, le système de propulsion peut comprendre un ensemble de n machines électriques de propulsion, n étant supérieur à 2.

Dans ce premier exemple de mise en oeuvre de l'invention, le système de propulsion 1 équipé de deux machines électriques réversibles est accouplé à une transmission du véhicule hybride qui comprend également un moteur thermique, une boite de vitesses et un mécanisme d'embrayage à friction disposé entre le moteur et la boite de vitesses. La boite de vitesses comprend notamment un arbre secondaire destiné à entraîner un ensemble d'une ou plusieurs roues motrices du véhicule.

Le train d'engrenage 3 est ici un réducteur de vitesse comprenant deux arbres de transmission 32 distincts, chacun des arbres de transmission 32 étant lié cinématiquement avec l'arbre de sortie 23 du rotor 22 de sorte à former un réducteur de vitesse entre chaque arbre de sortie de rotor et chaque arbre transmission. Le train d'engrenage 3 comprend également un arbre cannelé terminal 31 dont la vitesse de rotation est adaptée pour être lié cinématiquement à l'arbre secondaire de la boite de vitesses. Ceci permet d'envisager divers modes de fonctionnement du véhicule parmi lesquels : un mode d'entraînement électrique permanent de l'arbre secondaire par les deux machines électriques réversibles fonctionnant en moteur, un mode transitoire de maintien de la traction lors des changements de rapport au sein de la boite de vitesses et un mode de freinage régénératif dans lequel on génère de l'énergie électrique avec les machines électriques réversibles fonctionnant en génératrice.

Dans ce système de propulsion 1, chaque machine électrique 2 comprend un stator 21 agencé radialement à l'extérieur du rotor 22 et une enveloppe de protection 24 entourant le stator. Les axes de rotation des machines électriques tournantes sont parallèles mais non confondus, les deux machines électriques 2 n'ayant pas leurs axes de rotation alignés.

Le carter de transmission 4 comporte une paroi externe 41 et une surface plane d'appui 42 définissant un deuxième plan YZ perpendiculaire à l'axe de rotor X aménagée sur la paroi externe 41 pour supporter les deux machines électriques. Le carter de transmission 4 définit un espace interne 40 à l'intérieur duquel est disposé le train d'engrenage 3.

Les enveloppes de protection 24 des machines électriques comprennent une embase de fixation 25 pour la fixation sur la surface plane d'appui 42 du carter de transmission 4. Deux ouvertures 43 débouchant dans la surface plane d'appui 42 selon un axe parallèle à l'axe de rotor X, permettent le passage des rotors 22 au sein de l'espace interne 40. Les deux ouvertures 43 sont traversées chacune par l'arbre de sortie 23 des rotors 22 de machine électrique.

Chaque enveloppe de protection 24 est de forme sensiblement cylindrique définie par une longueur L et un diamètre extérieur D. Plus précisément, l'enveloppe de protection 24 présente un ratio de la longueur L divisée par le diamètre extérieur D supérieur à 0,8 tel que L / D > 0,8. Dans l'exemple de la figure 2, le ratio L / D est égal à 1,25.

Les enveloppes de protection 24 des deux machines électriques 2 sont reliées entre-elles par un élément de réduction de bruit 5 disposé géométriquement entre les axes X de rotation des rotors des deux machines électriques. L'élément de réduction de bruit 5 est disposé du côté d'une extrémité libre 26 de l'enveloppe de protection 24 située à l'opposé axialement de l'embase de fixation 25, au moins dans une zone située axialement entre le milieu de l'enveloppe de protection et son extrémité libre. Une telle implantation de l'élément de réduction de bruit 5 présente l'avantage de réduire le rayonnement acoustique généré par le mouvement des enveloppes de protection.

L'élément de réduction de bruit 5 est une plaque de liaison reliant les extrémités libres 26 des enveloppes de protection 24 des machines électriques et qui s'étend axialement selon l'axe de rotor X au-delà de l'extrémité libre 26. L'élément de réduction de bruit 5 est ici commun à toutes les machines électriques.

L'élément de réduction de bruit 5 est réalisé en matériau métallique tel que de l'acier et présente des caractéristiques mécaniques de raideur dans le deuxième plan YZ et dans le troisième plan XZ. De cette manière, l'élément de réduction de bruit 5 se caractérise par une raideur élevée qui limite le déplacement des extrémités libres 26 des machines électriques 2 par rapport au carter de transmission 4. L'élément de réduction de bruit 5 comprend deux plots de fixation 55 rapporté sur les extrémités libres 26 et une plaque de liaison 54 faisant la jonction entre les deux plots de fixation 55. Pour augmenter sa raideur, l'élément de réduction de bruit 5 comprend des goussets 51 de rigidification intercalés entre les plots 55 et la plaque de liaison 54. Grâce à ces goussets 51 de rigidification, l'élément de réduction de bruit 5 réduit les amplitudes de mouvement des enveloppes de protection 24 notamment lorsqu'il est soumis aux mouvements illustrés sur les figures 1a à 1d.

La surface plane d'appui 42 des machines électriques réversibles sur le carter de transmission 4 définit un deuxième plan YZ perpendiculaire à l'axe X de rotation du rotor et la raideur en flexion suivant le premier plan XY et le troisième plan XZ de l'élément de réduction de bruit est supérieur à 10 % de la raideur en flexion du carter de transmission suivant les mêmes plans. A partir d'un tel niveau de raideur, les extrémités libres des enveloppes de protection ne sont plus mécaniquement découplées.

Chaque machine électrique est ici alimentée électriquement par un onduleur 6 de transformation de courant électrique continu en courant électrique alternatif, l'onduleur comprenant un ensemble 61 de composants électriques pour ladite transformation et un boîtier 62 de protection accueillant l'ensemble de composants électriques. Les onduleurs 6 sont fixés directement sur l'élément de réduction de bruit.

Avantageusement, les onduleurs 6 sont disposés axialement selon l'axe de rotor X dans la continuité des deux machines électriques. Les deux onduleurs sont disposés en regard de part et d'autre du troisième plan XZ.

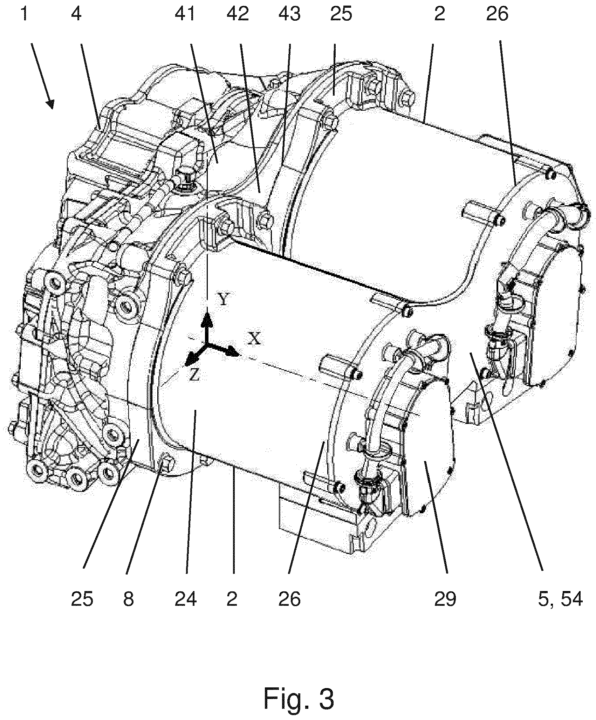

On va maintenant décrire en référence à la figure 3, un système de propulsion 1 selon un deuxième mode de mise en oeuvre de l'invention sensiblement similaire au précèdent. Ce deuxième mode de mise en oeuvre de l'invention se distingue par le fait que l'élément de réduction de bruit 5 est une plaque de liaison 54 reliant les extrémités libres 26 des enveloppes de protection des deux machines électriques et par le fait que la plaque de liaison 54 est aussi une plaque de fermeture commune des machines électriques au niveau de leurs extrémités libres 26.

Dans ce deuxième mode de réalisation, la plaque de liaison 54 est plane et supporte des boitiers électroniques 29 d'alimentation électrique.

Chaque machine électrique 2 comprend une embase de fixation 25 pour la fixation sur la surface plane d'appui 42 du carter de transmission 4. Les enveloppes de protection sont fixées à l'aide de vis de fixation 8.

Dans ce deuxième mode de réalisation, la plaque de liaison 54 est située au bout des machines électriques.

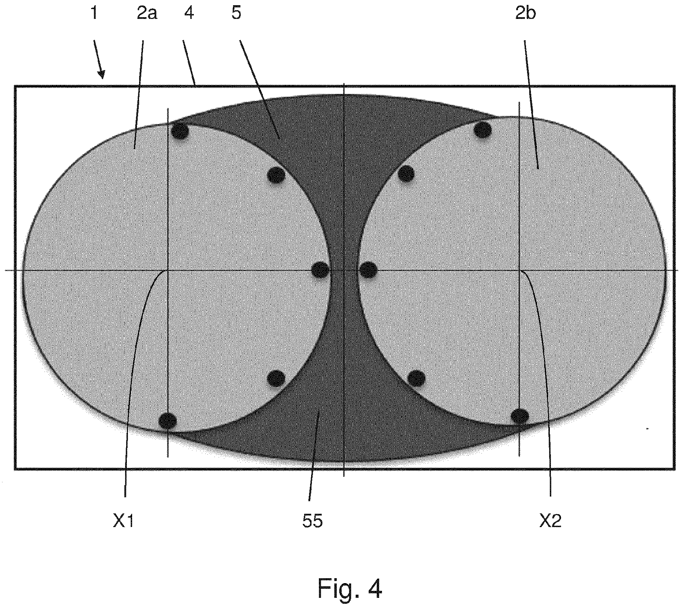

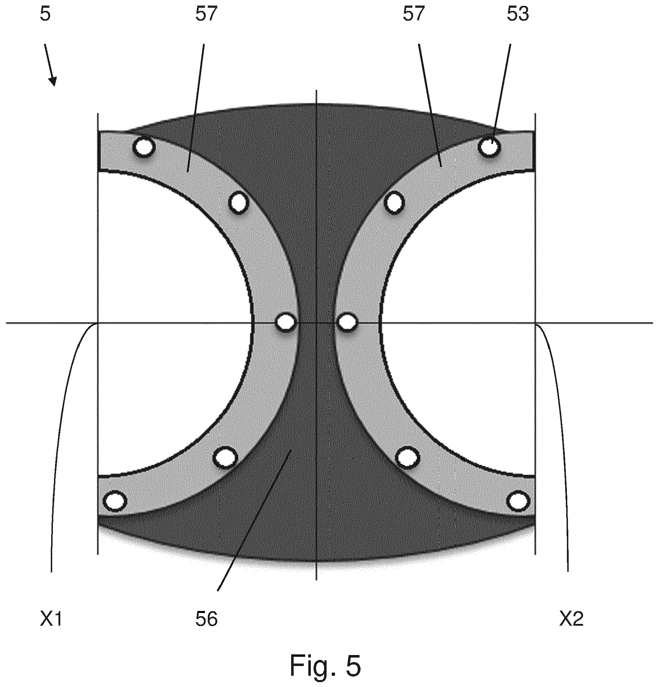

On va maintenant décrire en référence aux figures 4 et 5, un système de propulsion 1 selon un troisième mode de mise en oeuvre de l'invention qui se distingue du premier mode par le fait que l'élément de réduction de bruit 5 est réalisé partiellement en élastomère et présente des caractéristiques mécaniques de raideur et d'amortissement dans le deuxième plan YZ et / ou dans le troisième plan XZ. De cette manière, l'élément de réduction de bruit 5 se caractérise par une raideur faible et un amortissement élevé qui vise à dissiper de l'énergie au sein du matériau élastomère.

Les enveloppes de protection 24 des deux machines électriques 2a, 2b sont reliées entre-elles par l'élément de réduction de bruit 5 disposé géométriquement entre les axes X1, X2 de rotation des rotors des deux machines électriques. L'élément de réduction de bruit 5 est disposé du côté de l'extrémité libre 26 de l'enveloppe de protection 24 située à l'opposé axialement de l'embase de fixation 25, Une telle implantation de l'élément de réduction de bruit 5 présente l'avantage de réduire le rayonnement acoustique généré par le mouvement des enveloppes de protection. L'amplitude du mouvement de l'enveloppe de protection est limitée par la nature même du matériau élastomère. On réduit ainsi le rayonnement acoustique généré par l'enveloppe de protection.

Comme illustré sur la figure 5, l'élément de réduction de bruit 5 comprend une âme centrale 56 réalisée en matériau élastomère et des interfaces de liaison 57 rapportée sur l'enveloppe de protection et réalisées en matériau métallique. L'âme centrale 56 en élastomère est rapportée sur les interfaces de liaison 57. Chaque interface de fixation comprend des orifices 53 pour le passage de vis de fixation.

Le matériau élastomère peut être en caoutchouc, ou en néoprène ou en une autre matière synthétique ayant des propriétés élastiques de compression. Grâce à ce matériau élastomère, l'élément de réduction de bruit 5 fonctionne en traction compression pour amortir les amplitudes de mouvement des enveloppes de protection 24 notamment lorsqu'il est soumis aux mouvements illustrés sur les figures 1a et 1c.

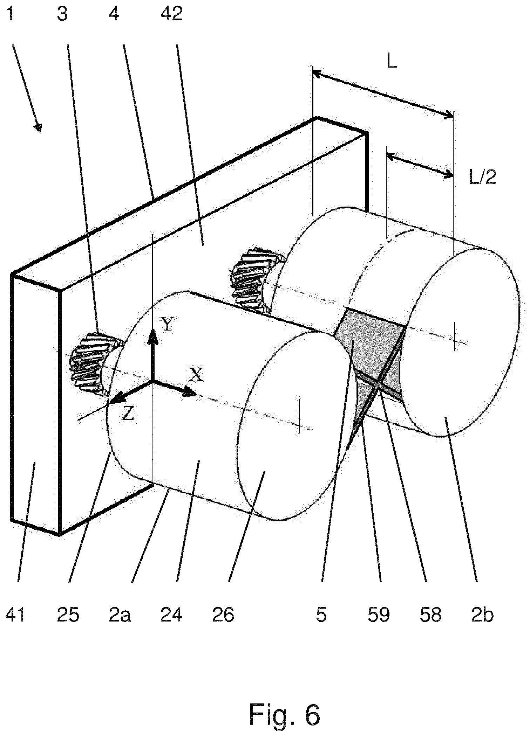

On va maintenant décrire en référence à la figure 6, un système de propulsion 1 selon un quatrième mode de mise en oeuvre de l'invention sensiblement similaire au précèdent. Ce quatrième mode de mise en oeuvre de l'invention se distingue par le fait que l'élément de réduction de bruit 5 présente dans le deuxième plan YZ une forme de croix 58 réalisée partiellement en élastomère.

Cet élément de réduction de bruit 5 présente des caractéristiques mécaniques de raideur et d'amortissement dans le deuxième plan YZ et dans le troisième plan XZ notamment grâce à la forme de croix 58 comprenant des croisillons 59. Chacun des croisillons 59 de la croix s'étend selon l'axe de rotor X et relie la première machine électrique à la deuxième machine électrique.

L'élément de réduction de bruit 5 est rapporté sur le cylindre de l'enveloppe de protection 24 du côté de l'extrémité libre 26 située à l'opposé axialement de l'embase de fixation 25, dans une zone située axialement entre le milieu de l'enveloppe de protection et l'extrémité libre. Dans l'exemple de la figure 6, l'élément de réduction de bruit 5 s'étend sur la moitié de la longueur L de l'enveloppe de protection.

La croix 58 peut être réalisée en caoutchouc, ou en néoprène ou en une autre matière synthétique ayant des propriétés élastiques de compression. Grâce à ce matériau élastomère et la présence des croisillons 59, l'élément de réduction de bruit 5 fonctionne en traction compression pour amortir les amplitudes de mouvement des enveloppes de protection 24 notamment lorsqu'il est soumis aux mouvements illustrés sur les figures 1a à 1d.

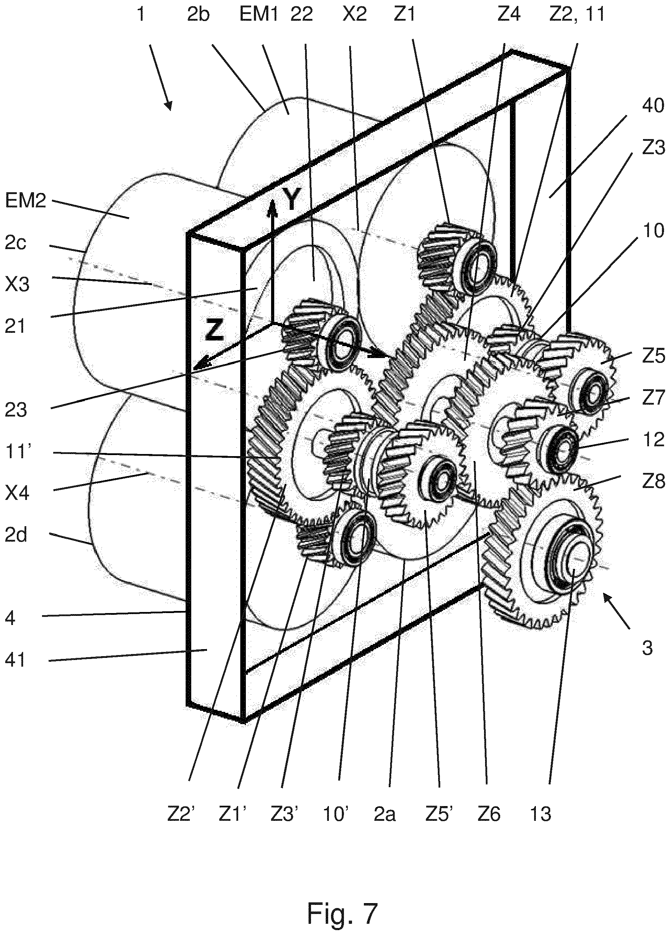

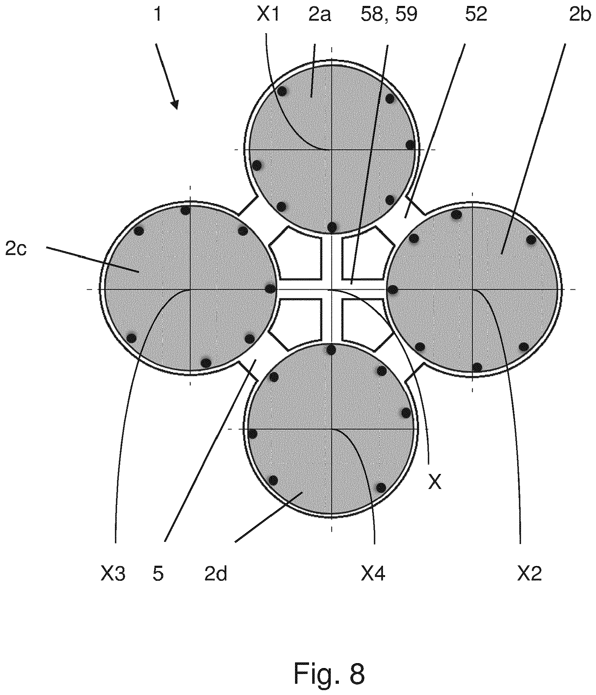

On va maintenant décrire en référence aux figures 7 et 8, un cinquième mode de mise en oeuvre de l'invention, qui diffère des précédents par une architecture comprenant quatre machines électriques 2 réversibles liées cinématiquement à deux roues dentées communes 11, 11'. Ce système de propulsion 1 est ici purement électrique, c'est-à-dire qu'il n'utilise aucun moteur thermique pour entraîner le véhicule qui est ici un véhicule industriel, par exemple un poids lourd.

Les machines électriques tournantes 2a, 2b, 2c, 2d sont du même type et sont par exemple des machines synchrones à aimants permanents. Chaque machine électrique fournit une même puissance nominale mécanique, cette puissance étant par exemple de l'ordre 100kW. Les quatre machines électriques sont réparties de manière régulière autour de l'axe de rotation de la roue dentée commune selon un angle Δ égal à 90°.

Dans ce système de propulsion 1, chaque machine électrique 2a, 2b, 2c et 2d comprend un stator 21 agencé radialement à l'extérieur du rotor 22 et une enveloppe de protection 24 entourant le stator. Les machines électriques sont rapportées sur un carter de transmission 4 qui comporte une paroi externe 41 et une surface plane d'appui 42 définissant un deuxième plan YZ perpendiculaire à l'axe de rotor X aménagée sur la paroi externe 41 pour supporter les quatre machines électriques. Le carter de transmission 4 définit un espace interne 40 à l'intérieur duquel est disposé le train d'engrenage 3.

Comme illustré sur la figure 7, le système de propulsion 1 comprend un premier sous-ensemble EM1 de deux machines électriques 2a, 2b de propulsion apte à fournir un premier couple moteur. La première machine électrique 2a présente un premier axe de rotation X1 et la deuxième machine électrique 2b présente un deuxième axe de rotation X2.

Chaque machine électrique 2a, 2b du premier sous-ensemble EM1 comprend un stator 21 et un rotor 22 présentant un arbre de sortie 23 mobile en rotation autour d'un axe lié cinématiquement à une première roue dentée commune 31 de sorte à former un premier réducteur de vitesse Z1, Z2. Les arbres de sortie 23 des deux machines électriques 2a, 2b engrènent simultanément sur la première roue dentée commune 11 disposée entre les axes X1 et X2.

Ce système de propulsion 1 comprend un deuxième sous-ensemble EM2 de deux machines électriques 2c, 2d de propulsion apte à fournir un deuxième couple moteur. La troisième machine électrique 2c présente un troisième axe de rotation X3 et la quatrième machine électrique 2d présente un quatrième axe de rotation X4.

Chaque machine électrique 2c, 2d du deuxième sous-ensemble EM2 comprend un stator 21 et un rotor 22 présentant un arbre de sortie 23 mobile en rotation autour d'un axe lié cinématiquement à une deuxième roue dentée commune 11' de sorte à former un deuxième réducteur de vitesse Z1', Z2'. Les arbres de sortie 23 des deux machines électriques 2c, 2d engrènent simultanément sur la deuxième roue dentée commune 11' disposée entre les axes X3 et X4.

Un carter de transmission 4 supporte les quatre machines électriques et les roues dentées communes 11 et 11' à l'aide de paliers de guidage. Le carter de transmission 4 comprend un circuit de circulation de fluide cheminant entre les quatre machines électriques afin d'évacuer les calories émises lors de la transmission d'un couple au sein du système de propulsion. Le fluide peut être de l'huile de refroidissement ou une solution aqueuse.

Le système de propulsion 1 comprend un premier ensemble de trains d'engrenage liant cinématiquement la première roue dentée commune 11 à un arbre secondaire 13. Plus précisément, le premier ensemble de trains d'engrenage comprend:
- des roues dentées primaires Z3, Z5 aptes à être entraînées par la première roue dentée commune 11,
- un arbre intermédiaire 12 apte à être entraîné par des roues dentées intermédiaires Z4, Z6, chaque roue dentée primaire Z3, Z5 étant liée cinématiquement à une roue dentée intermédiaire Z4, Z6 correspondante de sorte à former un train d'engrenage correspondant à un troisième réducteur de vitesse,
- une roue dentée secondaire Z8 solidaire en rotation de l'arbre secondaire 13 et liée cinématiquement à l'arbre intermédiaire 12 de sorte à former un quatrième réducteur de vitesse.

Le premier ensemble de trains d'engrenage comprend également un premier système de couplage sélectif 10, disposé entre la première roue dentée commune 11 et l'arbre secondaire 13, agencé pour sélectionner un premier train d'engrenage Z3, Z4 ou un deuxième train d'engrenage Z5, Z6 depuis une position neutre de découplage. Le premier système de couplage sélectif 10 est disposé entre la première roue dentée commune 11 et les roues dentées primaires Z3, Z5. Ce premier système de couplage sélectif 10 à trois positions est réalisé sous la forme d'un crabot.

Dans ce cinquième exemple de mise en oeuvre de l'invention, le deuxième ensemble de trains d'engrenage comprend un deuxième système de couplage sélectif 10', disposé entre la deuxième roue dentée commune 11' et l'arbre secondaire 13, agencé pour sélectionner un troisième train d'engrenage Z3', Z4 ou un quatrième train d'engrenage Z5', Z6 depuis une position neutre lors d'une phase de changement de rapport de vitesse.

En raison de l'architecture sensiblement symétrique du système de propulsion 1, le rapport de réduction du premier train d'engrenage Z3, Z4 est identique à celui du troisième train d'engrenage Z3', Z4 et le rapport de réduction du deuxième train d'engrenage Z5, Z6 est identique à celui du quatrième train d'engrenage Z5', Z6.

Le deuxième ensemble de trains d'engrenage comprend :
- deux roues dentées primaires Z3', Z5' aptes à être entraînées par la deuxième roue dentée commune 11',
- l'arbre intermédiaire 12 commun avec le premier ensemble de trains d'engrenage, chaque roue dentée primaire Z3', Z5' du deuxième ensemble de trains d'engrenage étant liée cinématiquement à une roue dentée intermédiaire Z4, Z6 correspondante de sorte à former un train d'engrenage auquel est associé un cinquième réducteur de vitesse.

Le deuxième système de couplage sélectif 10' est disposé entre la deuxième roue dentée commune 11' et les roues dentées primaires Z3', Z5'. Ce deuxième système de couplage sélectif 20 à trois positions est réalisé sous la forme d'un crabot.

Ce cinquième exemple de mise en oeuvre de l'invention présente l'avantage d'avoir deux rapports de réduction distincts sans perte de couple ou de puissance lors des phases de changement de rapport de vitesse. Ce système de propulsion 1 présente également l'avantage, grâce à la présence d'un élément de réduction de bruit 5 entre les axes de rotation des rotors, de réduire les oscillations des enveloppes de protection des machines électriques ainsi que la flexion du carter de transmission au moins dans les deux plans XY et XZ en même temps.

Plus précisément, les enveloppes de protection 24 des quatre machines électriques 2 sont reliées entre-elles par un élément de réduction de bruit 5 disposé géométriquement entre les axes X de rotation des rotors des machines électriques. L'élément de réduction de bruit 5 est disposé du côté de l'extrémité libre 26 de l'enveloppe de protection 24 située à l'opposé axialement de la surface plane d'appui 42 du carter de transmission 4.

Comme illustré sur la figure 8, l'élément de réduction de bruit 5 est une plaque de liaison reliant les extrémités libres 26 des enveloppes de protection 24 qui présente dans le deuxième plan YZ une forme de croix 58 comprenant des croisillons 59. Chacun des croisillons 59 de la croix s'étend selon l'axe X et traverse l'axe de rotor X pour relier deux machines électriques opposées. L'élément de réduction de bruit 5 comprend également des bras de liaison 52 reliant deux machines électriques adjacentes.

Cet élément 5 est réalisé en matériau métallique tel que de l'aluminium et présente des caractéristiques mécaniques de raideur dans les deux plans YZ et XZ. De cette manière, l'élément de réduction de bruit 5 se caractérise par une raideur élevée qui limite le déplacement des extrémités libres 26 des machines électriques 2 par rapport au carter de transmission 4. On réduit les amplitudes de mouvement des enveloppes de protection 24 notamment lorsque l'élément de réduction de bruit 5 est soumis aux mouvements illustrés sur les figures 1a à 1d.

L'invention n'est pas limitée aux exemples qui viennent d'être décrits.

## Revendications

1. Système de propulsion (1) pour véhicule électrique ou hybride, comprenant dans un repère orthogonal (XYZ) :
- un ensemble de n machines électriques (2) de propulsion, n étant un nombre entier supérieur ou égal à 2, chaque machine électrique comprenant un stator (21), un rotor (22) présentant un arbre de sortie (23) mobile en rotation autour d'un axe de rotor (X) et une enveloppe de protection (24) entourant le stator ;
- un train d'engrenage (3) lié cinématiquement aux n arbres de sortie (23) et apte à recevoir le couple moteur fourni par les n machines électriques (2) ;
- un carter de transmission (4) supportant les enveloppes de protection (24) des n machines électriques et au moins en partie le train d'engrenage (3) ;
**caractérisé en ce que** les enveloppes de protection (24) des n machines électriques sont reliées entre-elles par au moins un élément de réduction de bruit (5) disposé géométriquement entre les axes (X) de rotation des rotors des n machines électriques.

2. Système de propulsion (1) selon la revendication précédente, dans lequel les axes (X) de rotation des rotors (22) des n machines électriques (2) sont parallèles entre eux et les enveloppes de protection (24) s'étendent axialement dans la même direction par rapport au carter de transmission (3).

3. Système de propulsion (1) selon l'une des revendications précédentes, dans lequel le carter de transmission (4) comporte une paroi externe (41), au moins une surface plane d'appui (42) définissant un deuxième plan (YZ) perpendiculaire à l'axe de rotor (X) aménagée sur la paroi externe pour supporter les n machines électriques, et n ouvertures (43) débouchant dans la ou les surfaces planes d'appui (42) selon un axe parallèle à l'axe de rotor (X), les n ouvertures étant traversées chacune par un arbre de sortie(23) de rotor de machine électrique.

4. Système de propulsion (1) selon la revendication précédente, dans lequel la surface plane d'appui (42) des machines électriques (2) sur le carter de transmission définit un deuxième plan (YZ) perpendiculaire à l'axe (X) de rotation du rotor, la raideur en flexion suivant le premier plan (XY) et/ou le troisième plan (XZ) de l'élément de réduction de bruit (5) est supérieur à 10 % de la raideur en flexion du carter de transmission suivant le même plan.

5. Système de propulsion (1) selon l'une des revendications précédentes, dans lequel chaque enveloppe de protection (24) est de forme sensiblement cylindrique définie par sa longueur (L) et son diamètre extérieur (D), l'enveloppe de protection présentant un ratio de la longueur (L) divisée par le diamètre extérieur (D) supérieur à 0,8
tel que L / D > 0,8, de préférence L / D > 1, de préférence L / D > 2.

6. Système de propulsion (1) selon l'une des revendications précédentes, dans lequel chaque enveloppe de protection (24) comprend une embase de fixation (25) pour la fixation sur le carter de transmission, l'élément de réduction de bruit (5) étant disposé du côté d'une extrémité libre (26) de l'enveloppe de protection située à l'opposé axialement de l'embase de fixation, au moins dans une zone située axialement entre le milieu de l'enveloppe de protection (24) et son extrémité libre (26), l'élément de réduction de bruit (5) pouvant s'étendre axialement selon l'axe de rotor (X) au-delà de l'extrémité libre.

7. Système de propulsion (1) selon l'une des revendications précédentes, dans lequel l'élément de réduction de bruit (5) est une plaque de liaison (54) reliant les extrémités libres (26) des enveloppes de protection (24) d'au moins n machines électriques, n étant un nombre entier supérieur ou égal à 2.

8. Système de propulsion (1) selon la revendication précédente, dans lequel la plaque de liaison (54) est une plaque de fermeture de la machine électrique (2) au niveau de son extrémité libre (26).

9. Système de propulsion (1) selon l'une des revendications précédentes, dans lequel l'élément de réduction de bruit (5) est rapporté sur le cylindre de l'enveloppe de protection (24) de chaque machine électrique.

10. Système de propulsion (1) selon l'une des revendications précédentes, dans lequel l'élément de réduction de bruit (5) est réalisé au moins partiellement en élastomère et présente des caractéristiques mécaniques de raideur et d'amortissement dans le deuxième plan (YZ) et / ou dans le troisième plan (XZ).

11. Système de propulsion (1) selon la revendication précédente, dans lequel l'élément de réduction de bruit (5) comprend une âme centrale (56) réalisée en matériau élastomère et des interfaces de liaison (57) solidarisées sur l'enveloppe de protection et réalisées en matériau métallique.

12. Système de propulsion (1) selon l'une des revendications précédentes, dans lequel chaque machine électrique est alimentée électriquement par au moins un onduleur (6) de transformation de courant électrique continu en courant électrique alternatif, l'onduleur (6) comprenant :
- un ensemble (61) de composants électriques pour ladite transformation ; et
- un boîtier (62) de protection accueillant l'ensemble (61) de composants électriques ;
l'onduleur étant fixé sur l'élément de réduction de bruit (5).

13. Système de propulsion (1) selon l'une des revendications précédentes, comprenant deux machines électriques (2a, 2b), l'élément de réduction de bruit (5) présente dans le deuxième plan (YZ) une forme de croix (58) et chacun des croisillons (59) de la croix s'étendant selon l'axe de rotor (X) relie la première machine électrique (2a) à la deuxième machine électrique (2b).

14. Système de propulsion (1) selon l'une des revendications précédentes, dans lequel le train d'engrenage (3) est un réducteur de vitesse comprenant des arbres de transmission (32) distincts, chacun des arbres de transmission (32) étant lié cinématiquement avec l'arbre de sortie (23) d'au moins un rotor de sorte à former un réducteur de vitesse (Z1, Z2) entre chaque arbre de sortie de rotor et chaque arbre transmission.

15. Système de propulsion (1) selon l'une des revendications 1 à 13, dans lequel le train d'engrenage (3) est une roue dentée commune (11, 11') liée cinématiquement avec l'arbre de sortie (23) de chaque rotor, les n machines électriques (2) étant réparties angulairement autour de la roue dentée commune de sorte à former un réducteur de vitesse (Z1, Z2) entre chaque arbre de sortie de rotor et la roue dentée commune.

## Patentansprüche

1. Antriebssystem (1) für ein Elektro- oder Hybridfahrzeug, umfassend in einem orthogonalen Koordinatensystem (XYZ):
- eine Anordnung von n elektrischen Antriebsmaschinen (2), wobei n eine ganze Zahl größer oder gleich 2 ist, wobei jede elektrische Maschine einen Stator (21), einen Rotor (22), der eine um eine Rotorachse (X) drehbewegliche Abtriebswelle (23) aufweist, und einen den Stator umgebenden Schutzmantel (24) umfasst;
- ein Zahnradgetriebe (3), das kinematisch mit den n Abtriebswellen (23) verbunden ist und geeignet ist, das von den n elektrischen Maschinen (2) abgegebene Motordrehmoment aufzunehmen;
- ein Getriebegehäuse (4), das die Schutzmäntel (24) der n elektrischen Maschinen und mindestens zum Teil das Zahnradgetriebe (3) trägt;
**dadurch gekennzeichnet, dass** die Schutzmäntel (24) der n elektrischen Maschinen untereinander durch mindestens ein Geräuschminderungselement (5) verbunden sind, das geometrisch zwischen den Rotationsachsen (X) der Rotoren der n elektrischen Maschinen angeordnet ist.

2. Antriebssystem (1) nach dem vorhergehenden Anspruch, wobei die Rotationsachsen (X) der Rotoren (22) der n elektrischen Maschinen (2) parallel zueinander sind und die Schutzmäntel (24) sich axial in dieselbe Richtung in Bezug auf das Getriebegehäuse (3) erstrecken.

3. Antriebssystem (1) nach einem der vorhergehenden Ansprüche, wobei das Getriebegehäuse (4) eine Außenwand (41), mindestens eine plane Anlagefläche (42), die eine zu der Rotorachse (X) senkrechte zweite Ebene (YZ) definiert und an der Außenwand angeordnet ist, um die n elektrischen Maschinen zu tragen, und n Öffnungen (43), die in der oder den planen Anlageflächen (42) entlang einer parallel zu der Rotorachse (X) verlaufenden Achse münden, beinhaltet, wobei die n Öffnungen jeweils von einer Abtriebswelle (23) eines Rotors einer elektrischen Maschine durchquert werden.

4. Antriebssystem (1) nach dem vorhergehenden Anspruch, wobei die plane Anlagefläche (42) der elektrischen Maschinen (2) an dem Getriebegehäuse eine zu der Rotationsachse (X) des Rotors senkrechte zweite Ebene (YZ) definiert, wobei die Biegesteifigkeit entlang der ersten Ebene (XY) und/oder der dritten Ebene (XZ) des Geräuschminderungselements (5) mehr als 10 % der Biegesteifigkeit des Getriebegehäuses entlang derselben Ebene beträgt.

5. Antriebssystem (1) nach einem der vorhergehenden Ansprüche, wobei jeder Schutzmantel (24) eine im Wesentlichen zylindrische Form hat, die durch ihre Länge (L) und ihren Außendurchmesser (D) definiert wird, wobei der Schutzmantel einen Quotienten aus der Länge (L) und dem Außendurchmesser (D) von mehr als 0,8 aufweist,
so dass L/D > 0,8, bevorzugt L/D > 1, bevorzugt L/D > 2.

6. Antriebssystem (1) nach einem der vorhergehenden Ansprüche, wobei jeder Schutzmantel (24) eine Befestigungsfußfläche (25) zur Befestigung an dem Getriebegehäuse umfasst, wobei das Geräuschminderungselement (5) auf der Seite eines freien Endes (26) des Schutzmantels angeordnet ist, das axial entgegengesetzt zu der Befestigungsfußfläche gelegen ist, zumindest in einem Bereich, der axial zwischen der Mitte des Schutzmantels (24) und seinem freien Ende (26) gelegen ist, wobei sich das Geräuschminderungselement (5) axial entlang der Rotorachse (X) über das freie Ende hinaus erstrecken kann.

7. Antriebssystem (1) nach einem der vorhergehenden Ansprüche, wobei das Geräuschminderungselement (5) eine Verbindungsplatte (54) ist, die die freien Enden (26) der Schutzmäntel 24) von mindestens n elektrischen Maschinen verbindet, wobei n eine ganze Zahl größer oder gleich 2 ist.

8. Antriebssystem (1) nach dem vorhergehenden Anspruch, wobei die Verbindungsplatte (54) eine Abschlussplatte der elektrischen Maschine (2) an ihrem freien Ende (26) ist.

9. Antriebssystem (1) nach einem der vorhergehenden Ansprüche, wobei das Geräuschminderungselement (5) an den Zylinder des Schutzmantels (24) jeder elektrischen Maschine angesetzt ist.

10. Antriebssystem (1) nach einem der vorhergehenden Ansprüche, wobei das Geräuschminderungselement (5) mindestens teilweise aus Elastomer hergestellt ist und mechanische Steifigkeits- und Dämpfungseigenschaften in der zweiten Ebene (YZ) und/oder in der dritten Ebene (XZ) aufweist.

11. Antriebssystem (1) nach dem vorhergehenden Anspruch, wobei das Geräuschminderungselement (5) einen zentralen Steg (56), der aus Elastomermaterial hergestellt ist, und Verbindungsschnittstellen (57), die an dem Schutzmantel angebracht sind und aus metallischem Material hergestellt sind, umfasst.

12. Antriebssystem (1) nach einem der vorhergehenden Ansprüche, wobei jede elektrische Maschine elektrisch von mindestens einem Wechselrichter (6) zur Umwandlung von elektrischem Gleichstrom in elektrischen Wechselstrom gespeist wird, wobei der Wechselrichter (6) umfasst:
- eine Anordnung (61) von elektrischen Komponenten für die Umwandlung; und
- ein Schutzgehäuse (62), das die Anordnung (61) von elektrischen Komponenten aufnimmt;
wobei der Wechselrichter an dem Geräuschminderungselement (5) befestigt ist.

13. Antriebssystem (1) nach einem der vorhergehenden Ansprüche, umfassend zwei elektrische Maschinen (2a, 2b), wobei das Geräuschminderungselement (5) in der zweiten Ebene (YZ) eine Kreuzform (58) aufweist und jede der Streben (59) des Kreuzes, die sich entlang der Rotorachse (X) erstreckt, die erste elektrische Maschine (2a) mit der zweiten elektrischen Maschine (2b) verbindet.

14. Antriebssystem (1) nach einem der vorhergehenden Ansprüche, wobei das Zahnradgetriebe (3) ein Untersetzungsgetriebe ist, das verschiedene Antriebswellen (32) umfasst, wobei jede der Antriebswellen (32) kinematisch mit der Abtriebswelle (23) mindestens eines Rotors verbunden ist, so dass ein Untersetzungsgetriebe (Z1, Z2) zwischen jeder Rotorabtriebswelle und jeder Antriebswelle gebildet wird.

15. Antriebssystem (1) nach einem der Ansprüche 1 bis 13, wobei das Zahnradgetriebe (3) ein gemeinsames Zahnrad (11, 11') ist, das kinematisch mit der Abtriebswelle (23) jedes Rotors verbunden ist, wobei die n elektrischen Maschinen (2) winklig um das gemeinsame Zahnrad herum verteilt sind, so dass ein Untersetzungsgetriebe (Z1, Z2) zwischen jeder Rotorabtriebswelle und dem gemeinsamen Zahnrad gebildet wird.

## Claims

1. Propulsion system (1) for an electric or hybrid vehicle, comprising, in an orthogonal reference frame (XYZ) :
- an assembly of n electric propulsion machines (2), n being an integer greater than or equal to 2, each electric machine comprising a stator (21), a rotor (22) having an output shaft (23) that is rotatable about a rotor axis (X) and a protective casing (24) surrounding the stator;
- a gear train (3) kinematically connected to the n output shafts (23) and adapted to receive the drive torque supplied by the n electric machines (2);
- a transmission housing (4) supporting the protective casings (24) of the n electric machines and, at least in part, the gear train (3);
**characterized in that** the protective casings (24) of the n electric machines are connected to one another by at least one noise reduction element (5) positioned geometrically between the axes (X) of rotation of the rotors of the n electric machines.

2. Propulsion system (1) according to the preceding claim, wherein the axes (X) of rotation of the rotors (22) of the n electric machines (2) are parallel to one another and the protective casings (24) extend axially in the same direction relative to the transmission housing (3).

3. Propulsion system (1) according to one of the preceding claims, wherein the transmission housing (4) has an outer wall (41), at least one flat support surface (42) defining a second plane (YZ) perpendicular to the rotor axis (X) formed on the outer wall so as to support the n electric machines, and n openings (43) that open out on the flat support surface or surfaces (42) along an axis parallel to the rotor axis (X), the n openings each having an output shaft (23) of a rotor of an electric machine passing through them.

4. Propulsion system (1) according to the preceding claim, wherein the flat support surface (42) for supporting the electric machines (2) on the transmission housing defines a second plane (YZ) perpendicular to the axis (X) of rotation of the rotor, the bending stiffness in the first plane (XY) and/or the third plane (XZ) of the noise reduction element (5) is greater than 10% of the bending stiffness of the transmission housing in the same plane.

5. Propulsion system (1) according to one of the preceding claims, wherein each protective casing (24) has a substantially cylindrical shape defined by its length (L) and its outside diameter (D), the protective casing having a ratio of the length (L) divided by the outside diameter (D) of greater than 0.8,
such that L/D > 0.8 , preferably L/D > 1 , preferably L/D > 2.

6. Propulsion system (1) according to one of the preceding claims, wherein each protective casing (24) comprises an attachment flange (25) for attachment to the transmission housing, the noise reduction element (5) being positioned on the same side as a free end (26) of the protective casing located axially opposite the attachment flange, at least in a zone located axially between the middle of the protective casing (24) and its free end (26), and the noise reduction element (5) may extend axially along the rotor axis (X) beyond the free end.

7. Propulsion system (1) according to one of the preceding claims, wherein the noise reduction element (5) is a connection plate (54) connecting the free ends (26) of the protective casings (24) of at least n electric machines, n being an integer greater than or equal to 2.

8. Propulsion system (1) according to the preceding claim, wherein the connection plate (54) is a closure plate for closing off the electric machine (2) at its free end (26).

9. Propulsion system (1) according to one of the preceding claims, wherein the noise reduction element (5) is attached to the cylinder of the protective casing (24) of each electric machine.

10. Propulsion system (1) according to one of the preceding claims, wherein the noise reduction element (5) is made at least partially of elastomer and has mechanical stiffness and damping properties in the second plane (YZ) and/or in the third plane (XZ).

11. Propulsion system (1) according to the preceding claim, wherein the noise reduction element (5) comprises a central core (56) made of elastomer and connection interfaces (57) rigidly secured to the protective casing and made of metal.

12. Propulsion system (1) according to one of the preceding claims, wherein each electric machine is electrically powered by at least one inverter (6) for transforming direct current into alternating current, the inverter (6) comprising:
- a set (61) of electrical components for said transformation; and
- a protective housing (62) accommodating the set (61) of electrical components;
the inverter being secured to the noise reduction element (5) .

13. Propulsion system (1) according to one of the preceding claims, comprising two electric machines (2a, 2b), the noise reduction element (5) has, in the second plane (YZ), a cross shape (58) and each of the arms (59) of the cross extending along the rotor axis (X) connects the first electric machine (2a) to the second electric machine (2b).

14. Propulsion system (1) according to one of the preceding claims, wherein the gear train (3) is a gear reducer comprising separate transmission shafts (32), each of the transmission shafts (32) being kinematically connected to the output shaft (23) of at least one rotor in such a way as to form a gear reducer (21, Z2) between each output shaft of a rotor and each transmission shaft.

15. Propulsion system (1) according to one of Claims 1 to 13, wherein the gear train (3) is a common gearwheel (11, 11') kinematically connected to the output shaft (23) of each rotor, the n electric machines (2) being angularly distributed about the common gearwheel in such a way as to form a gear reducer (21, Z2) between each output shaft of a rotor and the common gearwheel.
